# EUROPÄISCHE PATENTSCHRIFT

(11) **EP 3 843 914 B1**
(45) Veröffentlichungstag und Bekanntmachung des Hinweises auf die Patenterteilung: **10.08.2022**
(21) Anmeldenummer: 19783410.4
(22) Anmeldetag: 26.08.2019
(51) Int. Cl.: B21D 5/00, B21D 5/02, G05B 19/409

(54) **VERFAHREN ZUM BETREIBEN EINER BIEGEMASCHINE**
METHOD FOR OPERATING A BENDING MACHINE
PROCÉDÉ D'UTILISATION D'UNE CINTREUSE

(30) Priorität: 28.08.2018 AT 507342018
(43) Veröffentlichungstag der Anmeldung: 07.07.2021
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); SCHERNHAMMER, Michael, 4060 Leonding (AT); STEININGER, Verena, 4020 Linz (AT); THEIS, Helmut, 4540 Pfarrkirchen (AT)
(74) Vertreter: Burger, Hannes
(86) Internationale Anmeldenummer: PCT/AT2019/060270
(87) Internationale Veröffentlichungsnummer: WO 2020/041807

(56) Entgegenhaltungen:
- EP-A1- 2 590 040
- EP-B1- 2 590 040
- WO-A1-2012/120430
- WO-A1-2018/039695
- WO-A1-2018/039696
- WO-A1-2020/036935
- JP-A- 2004 017 072

## Beschreibung

Die Erfindung betrifft ein Verfahren zur Herstellung eines Bauteils durch Umformung eines Werkstücks aus Blech mit einer Biegemaschine, entsprechend dem Oberbegriff von Anspruch 1. Solch ein Verfahren ist in der WO-A-2018/039696 offenbart.

Bei der Fertigung komplexer Bauteile mit einer Biegemaschine bzw. Biegepresse werden von einer Bedienperson in einer geeigneten Reihenfolge nacheinander mehrere Biegebearbeitungen an einem Werkstück durchgeführt. Solche Biegemaschinen zum sogenannten Freibiegen aber auch zum Prägebiegen sind mit zwei parallel zueinander ausgerichteten Pressbalken ausgerüstet, an denen jeweils paarweise angeordnete Biegewerkzeuge befestigt sind. Dabei können über die Länge der Pressbalken verteilt auch mehrere mit unterschiedlichen Biegewerkzeugen bestückte Biegestationen vorgesehen sein. Die jeweilige Biegebearbeitung erfolgt in dem das Werkstück zwischen den Biegewerkzeugen positioniert wird und sodann durch gegeneinanderpressen der Pressbalken gebogen wird. Das Werkstück wird dazu von der Bedienperson zwischen die Biegewerkzeuge gelegt, wobei es zur genauen Ausrichtung an Anschlägen zur Anlage gebracht wird. Einander entsprechende Biegewerkzeuge - Unterwerkzeug und Oberwerkzeug - werden auch als Matrize und Patrize bezeichnet.

In analoger Weise erfolgen Biegebearbeitungen an einer Biegemaschine zum Schwenkbiegen. Dabei wird das Werkstück bzw. Blechteil zwischen einer unteren und einer oberen Haltewange eingelegt, an Anschlägen ausgerichtet und durch Zusammendrücken der Haltewangen festgeklemmt. Die Biegebearbeitung erfolgt sodann durch ein Biegewerkzeug das auf den freien, aus den Haltewangen hervorragenden Schenkel des Werkstücks einwirkt.

Moderne Biegepressen bzw. Fertigungseinrichtungen verfügen auch über Steuervorrichtungen, durch die die Maschineneinstellungen der Aufeinanderfolge von Fertigungsschritten programmgesteuert vorgenommen werden. So werden beispielsweise die Anschläge motorisch betrieben, wobei diese durch die Steuervorrichtung, entsprechend den Befehlen eines Fertigungsprogramms, jeweils neu positioniert werden. Mit Hilfe solcher Steuerungen ist - basierend auf einem entsprechenden Fertigungsprogramm - ein halbautomatischer Betrieb der Biegemaschinen möglich. Dazu ist es üblich, dass eine Bedienperson das Werkstück in die Biegepresse legt, indem es dieses auf das Unterwerkzeug auflegt und an den Anschlägen zur Anlage bringt. Ausgelöst durch die Betätigung eines Schalters, beispielsweise eines Fußtasters, werden sodann die Pressbalken zusammengefahren und erfolgt dadurch die Umformung des Werkstücks. Das Verstellen bzw. das Neupositionieren der Anschläge für einen nachfolgenden Fertigungsschritt erfolgt sodann wieder auf der Grundlage des in der Steuerung hinterlegten Fertigungsprogramms automatisch.

Die Fertigungsschritte zur Durchführung jeweils einer Biegebearbeitung untergliedern sich in mehrere Phasen, wie dem Positionieren der Anschläge, dem Einlegen des Werkstücks durch Auflegen an dem Unterwerkzeug und Anlegen an den Anschlägen, dem Niederdrücken des Oberwerkzeugs gegen das Werkstück und das Unterwerkzeug, dem Hochfahren des Oberwerkzeugs und schließlich dem Entnehmen des Werkstücks aus der Maschine. In einem nachfolgenden Fertigungsschritt werden dann zunächst die Anschläge wieder neu positioniert und erfolgen die weiteren Phasen mit einer weiteren Biegeumformung an dem neu eingelegten Werkstück.

Trotz der Unterstützung, die die Bedienperson durch die programmgestützte Steuervorrichtung erfährt, verbleiben für den Maschinenbediener verschiedenste Aktionen zu koordinieren und zu überwachen. Insbesondere das Neuausrichten des Werkstücks und Einlegen in die richtige Biegestation und das korrekte Anlegen des Werkstücks an den Anschlägen erfordert eine entsprechende Routine der Bedienperson. Bei Serienproduktionen einer größeren Stückzahl, gleich zu bearbeitender Werkstücke ist diese Problematik weniger gravierend. Ausschussteile aufgrund von fehlerhafter Bedienung bzw. Zeitverzögerungen am Beginn der Serienproduktion fallen hier naturgemäß weniger ins Gewicht. Nicht so bei kleinen Serien mit geringer Stückzahl, dabei können Bedienfehler einen hohen Anteil von Ausschussteilen verursachen. Das Werkstück exakt und fehlerfrei an den Anschlägen zur Anlage zu bringen, kann wegen der beschränkten Sicht zwischen den Biegewerkzeugen hindurch erheblich behindert sein. Dazu sind im Stand der Technik bereits Lösungen bekannt, durch Anbringen von Kameras, die den - aus Sicht der Bedienperson - hinteren Teil des Bearbeitungsbereichs erfassen, der Bedienperson ein Bild davon an der Vorderseite des Pressbalkens darzustellen. Dabei kann insbesondere auch vorgesehen sein, vor der Projektion des Bildes auf die Vorderseite des Pressbalkens, das Bild derart perspektivisch zu transformieren, dass es der Bedienperson nahtlos in dessen Gesichtsfeld eingeblendet erscheint. Die Bedienperson sieht so in ihrem Gesichtsfeld den vorderen Teil des Bearbeitungsbereichs ergänzt um eine virtuelle Darstellung des hinter dem Pressbalken liegenden Teils des Bearbeitungsbereichs.

Es ist die Aufgabe der vorliegenden Erfindung ein Verfahren und eine Vorrichtung zur Herstellung eines Bauteils durch Umformung eines Werkstücks aus Blech zu schaffen, durch das/durch die die Arbeit für die Bedienperson vereinfacht wird und das Risiko von Bearbeitungsfehlern weiter reduziert werden kann.

Diese Aufgabe der Erfindung wird durch ein Verfahren zur Herstellung eines Bauteils durch Umformung eines Werkstücks aus Blech mit einer Fertigungseinrichtung mit zwei parallel zueinander ausgerichteten Pressbalken, mit an den Pressbalken befestigten Biegewerkzeugen und mit einer Steuervorrichtung und einem Fertigungsprogramm zum Betreiben der Fertigungseinrichtung, wobei in einem Bearbeitungsbereich zumindest zwei Fertigungsschritte mit jeweils einer Biegeumformung des Werkstücks durchgeführt werden gelöst. Dabei wird mit zumindest einer Kamera der Bearbeitungsbereich erfasst und werden der Bedienperson Bilder des Bearbeitungsbereichs durch ein Anzeigemittel dargestellt, wobei während der Durchführung eines ersten Fertigungsschritts von einem Bildverarbeitungsprogramm den durch das Anzeigemittel darzustellenden Bildern Arbeitsanleitungen für eine nachfolgende Phase des aktuellen, ersten Fertigungsschritts oder für einen nächstfolgenden, zweiten Fertigungsschritt überlagert und durch das Anzeigemittel dargestellt werden. Dies hat den Vorteil, dass die Bedienperson die Beobachtung und somit visuelle Überwachung der Vorgänge in der momentanen Biegestation nicht zu unterbrechen braucht, um Informationen über die nächstfolgenden Fertigungsschritte, beispielsweise von dem Bildschirm des Bedienterminals, einzuholen.

Vorteilhaft sind auch die Ausbildungen des Verfahrens, wobei die Arbeitsanleitung Symbole aus einer Gruppe, umfassend Linien, Pfeile und Balken, enthält oder, wenn die Arbeitsanleitung Symbole aus einer Gruppe, umfassend Drehachsen und Werteangaben von Drehwinkeln, enthält. Dadurch können mit dem Werkstück auszuführende Bewegungen und Lageänderungen zur Bedienung der Biegepresse auf einfache Weise bildlich dargestellt werden.

Von Vorteil ist auch, wenn die Arbeitsanleitung eine graphische Darstellung des Werkstücks enthält, da dadurch Änderungen der Werkstücks-Ausrichtung leicht verständlich mitgeteilt werden können.

Die Weiterbildung, wobei die Arbeitsanleitung ein zu einer bestimmten Stelle des Werkstücks weisendes Symbol zur Angabe eines bevorzugten Angriffspunkts zum Entnehmen des Werkstücks enthält, hat den Vorteil, dass dadurch Verzögerungen beim Herausnehmen des Werkstücks vermieden werden können. Die größer werdende Komplexität der geometrischen Form des Werkstücks - in Folge der zunehmenden Anzahl von an dem Werkstück vorgenommenen Biegeumformungen - kann nämlich dessen Entnahme durch den Zwischenraum zwischen den beiden Biegewerkzeugen schwieriger machen.

Vorteilhaft ist auch, wenn die Arbeitsanleitung ein Symbol zur Mitteilung einer Warnung wegen eines Bedienfehlers enthält, da dadurch sowohl die Sicherheit erhöht als auch möglicherweise anfallender Ausschuss geringgehalten werden können.

Die Weiterbildungen des Verfahrens, wobei die Arbeitsanleitung eine in Bewegung befindliche graphische Darstellung des Werkstücks enthält, oder wobei die Arbeitsanleitung in Bewegung befindliche graphische Darstellungen von Anschlägen zur Ausrichtung des Werkstücks enthält, haben den Vorteil einer besonderen Anschaulichkeit für die Bedienperson.

Von Vorteil ist auch, wenn die während einer zeitlichen Dauer der Darstellung der Arbeitsanleitung die bewegt erfolgende graphische Darstellung des Werkstücks mehrfach hintereinander wiederholt angezeigt wird, da dadurch von der Bedienperson die nötigen Informationen besser erfasst werden können.

Wenn die zeitliche Dauer der Darstellung der Arbeitsanleitung noch vor Beendigung der Phase des Auseinanderbewegens der Pressbalken begonnen wird oder wenn die zeitliche Dauer der Darstellung der Arbeitsanleitung gemeinsam schon mit dem Ende der ersten Biegeumformung begonnen wird, so kann die Bedienperson möglichst frühzeitig über die weiteren Fertigungsphasen bzw. Fertigungsschritte und Bedienhandlungen instruiert werden.

Von Vorteil ist auch, wenn die zeitliche Dauer der Darstellung der Arbeitsanleitung gemeinsam mit dem Start der zweiten Biegeumformung des nächstfolgenden Fertigungsschritts beendet wird, da dadurch die visuelle Überwachung des Biegevorgangs durch die Bedienperson nicht gestört wird.

Vorteilhaft ist auch, dass zur Bestimmung der räumlichen Koordinaten der Bedienperson von dem Positionsermittlungssystem Bilder einer an einer Vorderseite des oberen Pressbalkens angeordneten Kamera ausgewertet werden.

Erfindungsgemäß ist vorgesehen, dass die Steuervorrichtung ein Bilderkennungsprogramm umfasst und das Starten der Biegeumformungen automatisch nach Erkennen des Endes der Phase des Einlegens des Werkstücks in die Biegestation erfolgt, da dadurch die Bedienung noch mehr erleichtert wird.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegepresse zur Durchführung einer Biegeumformung an einem Werkstück;
- Fig. 2: einen Querschnitt der Biegepresse gemäß Fig. 1;
- Fig. 3: ein durch ein Anzeigemittel der Bedienperson dargestelltes Bild des Bearbeitungsbereichs;
- Fig. 4: ein Zeitablaufschema der Bearbeitung eines Werkstücks mit der Biegepresse;
- Fig. 5: eine Biegemaschine zum Schwenkbiegen in Seitenansicht und ausschnittsweise dargestellt;
- Fig. 6: ein Detail der Biegemaschine zum Schwenkbiegen gemäß Fig. 5;
- Fig. 7: ein Detail der Biegemaschine zum Schwenkbiegen gemäß Fig. 5 nach erfolgter Biegeumformung des Werkstücks.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

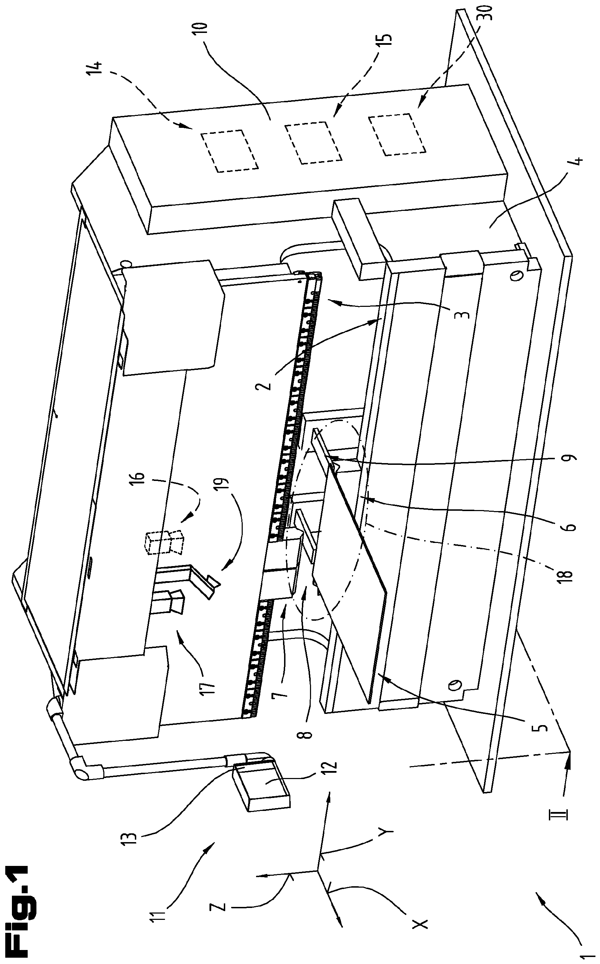

Die Fig. 1 zeigt eine Biegepresse 1 als Ausführungsbeispiel einer Fertigungseinrichtung bzw. einer Werkstückbearbeitungsmaschine. Die Biegepresse 1 verfügt in bekannter Weise über einen unteren Pressbalken 2 und einen oberen Pressbalken 3. Die beiden Pressbalken 2, 3 werden von einem Maschinengestell 4 gehalten, wobei der untere Pressbalken 2 fix, d.h. feststehend an dem Maschinengestell 4 befestigt ist. Der untere, feststehende Pressbalken 2 wird daher auch oft als Tischbalken bezeichnet. Der obere Pressbalken 3 andererseits ist an dem Maschinengestell 4 in vertikaler Richtung (Z-Richtung) verstellbar geführt. Mit Hilfe eines geeigneten motorischen Antriebes, beispielsweise mit Hilfe von Hydraulikzylindern (nicht dargestellt), kann der obere Pressbalken 3 auf den unteren Pressbalken 2 hin abgesenkt werden. Zur Durchführung einer Biegeumformung an einem Werkstück 5 werden an den beiden Pressbalken 2, 3 jeweils paarweise ein unteres Biegewerkzeug 6 (eine Matrize) und ein oberes Biegewerkzeug 7 (eine Patrize) befestigt. Eine Biegeumformung an dem Werkstück 5 erfolgt sodann durch ein gegeneinander bewegen der beiden Pressbalken 2, 3, wobei das obere Biegewerkzeug 7 (kurz: "Oberwerkzeug") gegen das Werkstück 5 und das untere Biegewerkzeug 6 (kurz: "Unterwerkzeug") angedrückt wird, bis das gewünschte Ausmaß der Verformung des Werkstücks 5 erreicht ist.

Neben den, die eigentliche Biegeumformung bewirkenden Biegewerkzeugen 6, 7, die durch die Relativverstellung der Pressbalken 2, 3 auf das Werkstück 5 einwirken, umfasst die Biegepresse 1 auch einen oder mehrere Anschläge 8, 9, an denen Kanten oder Seiten des Werkstücks 5 angelegt und somit ausgerichtet werden können. Die Anschläge 8, 9 werden üblicherweise auch als "Hinteranschläge" bezeichnet, da aus Sicht einer vor der Biegepresse 1 stehenden Bedienperson diese hinter den Pressbalken 2, 3 angeordnet sind. Nach entsprechender Positionierung der Anschläge 8, 9 relativ zu den Biegewerkzeugen 6, 7 kann von einer Bedienperson eine Biegung bzw. Kantung an dem Werkstück 5 sehr einfach und trotzdem mit großer Genauigkeit durchgeführt werden.

Zum Betreiben der Biegepresse 1 ist diese mit einer Steuervorrichtung 10 und mit einem Bedienterminal 11 ausgebildet. Auf einem Bildschirm 12 des Bedienterminals 11 können die Betriebszustände der Biegepresse 1 einer Bedienperson angezeigt werden und ist es der Bedienperson damit möglich, über eine Eingabevorrichtung 13 mit der Biegepresse 1 auszuführende Fertigungsschritte vorzubereiten. Diese Vorbereitung eines neuen Fertigungsschritts kann beispielsweise in einer Neupositionierung der Anschläge 8, 9 bestehen. Die Anschläge 8, 9 sind dazu motorgetrieben verstellbar und die Bedienperson kann, beispielsweise durch direkte Eingabe der neuen Koordinaten, die Neupositionierung der Anschläge 8, 9 bewirken.

Üblicherweise werden die für die einzelnen Fertigungsschritte erforderlichen Maschineneinstellungen in einem Fertigungsprogramm 14 in der Steuervorrichtung 10 hinterlegt. Die Bedienperson kann das Fertigungsprogramm 14 an dem Bedienterminal 11 aufrufen und zur Anzeige bringen. Die entsprechenden Fertigungsschritte können ausgewählt und die Einstellung des neuen Betriebszustandes der Biegepresse 1 gestartet werden. Nach Einlegen des Werkstücks 5, das heißt Auflegen des Werkstücks 5 auf das Unterwerkzeug 6 und Anlegen bzw. Auflegen an Anschlagsflächen der Anschläge 8, 9, kann dann die Biegeumformung durch gegeneinander bewegen der Pressbalken 2, 3 gestartet werden. Bei konventionellen Biegepressen steht dazu der Bedienperson ein separater, beispielsweise durch einen Fußtaster gebildeter Schalter zur Verfügung. Durch Betätigen des Schalters kann die Bedienperson das Niederdrücken und das Hochbewegen des oberen Pressenbalkens 3 steuern.

Die Steuervorrichtung 10 der Biegepresse 1 gemäß diesem Ausführungsbeispiel ist auch mit einem Bildverarbeitungsprogramm 15 ausgebildet. Weiters ist zumindest hinter den Pressbalken 2, 3 - aus Sicht einer vor der Biegepresse 1 stehenden Bedienperson - zumindest eine Kamera 16 angeordnet. Vorzugsweise ist auch vor dem oberen Pressbalken 3 eine weitere Kamera 17 angeordnet. Die hinter dem oberen Pressbalken 3 angeordnete Kamera 16 ist auf einen Bearbeitungsbereich 18 in der Umgebung der Biegewerkzeuge 6, 7 bzw. des Werkstücks 5 gerichtet. Die oberen Biegewerkzeuge 7 wie auch der obere Pressbalken 3 begrenzen das durch die Kamera 16 erfassbare Sehfeld, das durch diese nur ein hinterer Teil des Bearbeitungsbereichs 18 aufgezeichnet werden kann. Von der Kamera 16 gelieferte Bilder können, vorzugsweise nach Bearbeitung in dem Bildverarbeitungsprogramm 15, dazu genutzt werden, einer Bedienperson einen größeren, das heißt insbesondere einen sonst nicht zugänglichen Teil des Bearbeitungsbereichs 18 darzustellen und somit einsehbar zu machen. Dies erfolgt beispielsweise dadurch, dass an der dem Bediener zugewandten Vorderseite des oberen Pressbalkens 3 ein Anzeigemittel 19 angeordnet ist. Als Anzeigemittel 19 wird vorzugsweise ein Display verwendet, das im Bereich der Vorderseite des oberen Pressbalkens 3 angeordnet ist. Alternativ kann auch ein Projektor als Anzeigemittel 19 verwendet werden (Fig, 1, 2). Ein solcher kann von der Kamera 16 aufgezeichnete Bilder an die Vorderseite des oberen Pressbalkens 3 und des oberen Biegewerkzeugs 7 projizieren.

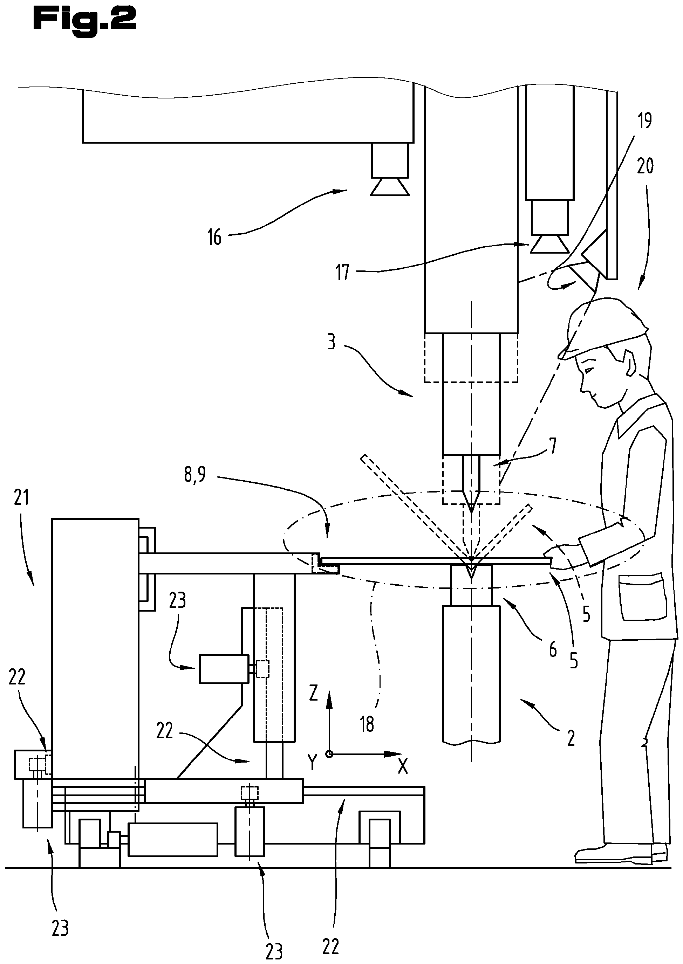

Die Bilder der Kamera 16 können vor ihrer Darstellung mit dem Anzeigemittel 19 durch das Bildverarbeitungsprogramm 15 perspektivisch transformiert werden. Ein solches Verfahren wird beispielsweise in dem österreichischen Patent AT 518 890 B1 beschrieben. In dem, beispielsweise mit der vorderen Kamera 17, auch die räumliche Position des Kopfs bzw. der Augen der Bedienperson (Fig. 2) ermittelt werden, können mit Hilfe des Bildverarbeitungsprogramms 15 die Bilder der Kamera 16 derart perspektivisch transformiert werden, dass der Bedienperson der hintere Teil des Bearbeitungsbereichs 18 nahtlos in sein Gesichtsfeld eingeblendet erscheint. Für die Transformation werden von dem Bildverarbeitungsprogramm 15 die räumlichen Koordinaten der Kamera 16, die Koordinaten des Bearbeitungsbereichs 18 als auch die Koordinaten der Position der Bedienperson bzw. des Kopfs der Bedienperson mitberücksichtigt.

Die Fig. 2 zeigt eine Seitenansicht bzw. einen Querschnitt der Biegepresse 1 gemäß Fig. 1. Die beiden Anschläge 8, 9 sind jeweils an einer Anschlagvorrichtung 21 befestigt und können mit deren Hilfe in den drei Raumrichtungen X, Y, Z verstellt und somit neu positioniert werden. Die Anschlagvorrichtungen 21 weisen dazu in die X-, Y- und Z-Richtung gerichtete Führungsbahnen 22 und damit wechselwirkende Stellmotoren 23 zum Verstellen der Anschläge 8, 9 auf. Das Werkstück 5 (ein Blechteil) wird von einer Bedienperson 20 in den Bearbeitungsbereich 18 zwischen das untere Biegewerkzeug 6 und das obere Biegewerkzeug 7 eingelegt und an den beiden Anschlägen 8, 9 ausgerichtet.

Die Fig. 2 zeigt das Werkstück 5 bzw. die Biegepresse 1 zu zwei unterschiedlichen Zeitpunkten von zwei aufeinander folgenden Phasen eines ersten Fertigungsschritt Fl der Herstellung eines Bauteils aus dem Werkstück 5. Die Lage des unverformten Werkstücks 5 - dargestellt in durchgezogenen Linien - entspricht dem Zeitpunkt des Endes der Phase "Einlegen des Werkstücks in den Bearbeitungsbereich und Anlegen an den Anschlägen". Die Lage des Werkstücks 5 im gebogenen Zustand - dargestellt in strichlierten Linien - entspricht dem Zeitpunkt des Endes der Biegeumformung bzw. dem Ende der Phase "Oberwerkzeug 7 gegen Werkstück 5 und Unterwerkzeug 6 andrücken".

Der erste Fertigungsschritt F1 - analog auch jeder weitere Fertigungsschritt F2, F3, usw. - kann in zumindest fünf Phasen bzw. Maßnahmen gegliedert werden. Diese Phasen sind:
P1: Positionieren der Anschläge 8, 9 zur Ausrichtung des Werkstücks 5 in dem Bearbeitungsbereich 18;
11: Einlegen des Werkstücks 5 in den Bearbeitungsbereich 18 durch Auflegen auf das Unterwerkzeug 6 und Anlegen bzw. Auflegen des Werkstücks 5 an den Anschlägen 8, 9;
B1: Durchführen der Biegeumformung durch Andrücken des Oberwerkzeuges 7 gegen das Werkstück 5 und das Unterwerkzeug 6 durch gegeneinander bewegen der Pressbalken 2, 3;
O1: Auseinander bewegen der Pressbalken 2, 3;
R1: Entnehmen des Werkstücks 5 aus dem Unterwerkzeug 6.

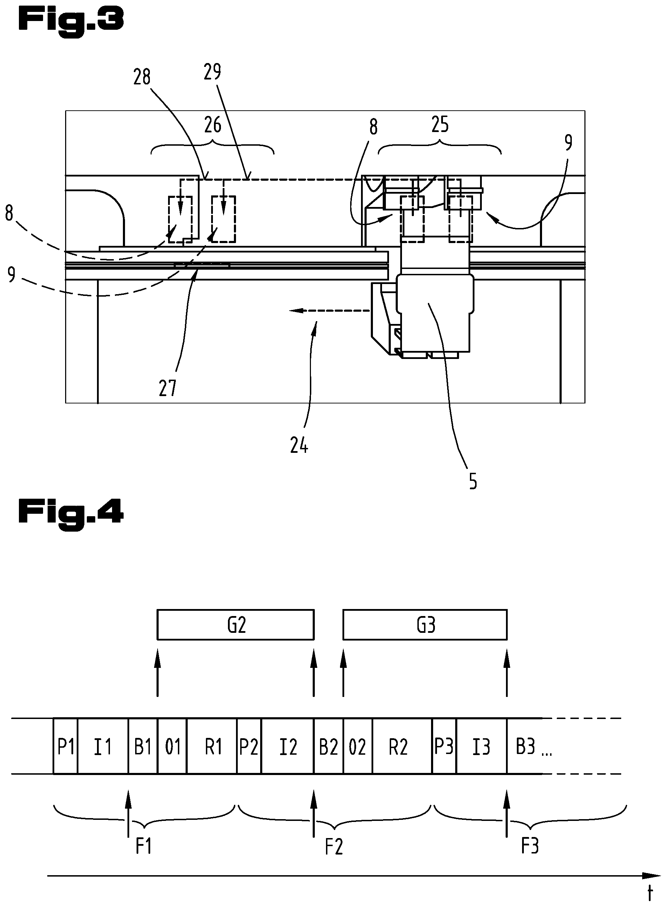

Vorzugsweise ab dem Zeitpunkt des Endes der ersten Biegeumformung B1 (Fig. 4) des Werkstücks 5 können der Bedienperson 20 durch das Anzeigemittel 19 - gemeinsam mit dem Bild der Kamera 16 von dem hinteren Teil des Bearbeitungsbereichs 18 - zusätzlich auch Informationen bzw. Anweisungen zu dem weiteren Verlauf der Bearbeitung des Werkstücks 5 angezeigt werden. Dazu werden in dem Bildverarbeitungsprogramm 15 bildlich bzw. grafisch darstellbare Hinweise von nächstfolgenden Phasen des aktuellen und des nächstfolgenden Fertigungsschritts F2 erzeugt und diese den Bildern von der Kamera 16 überlagert. Die so mit Arbeitsanleitungen angereicherten Bilder werden sodann durch das Anzeigemittel 19 in das Sehfeld der Bedienperson 20 projiziert.

Bei dem den Bildern überlagerten und von dem Anzeigemittel 19 dargestellten Arbeitsanleitungen handelt es sich beispielsweise um Linien oder Pfeile mit denen symbolisch Richtungen und Bewegungen bzw. Positionen von nachfolgenden Fertigungsschritten F2, F3 angezeigt werden. Die Bedienperson 20, deren Blick auf den Bearbeitungsbereichs 18 gerichtet ist, sieht somit in ihrem Sehfeld gleichzeitig auch eine Darstellung von Live-Bildern des hinteren Teils des Bearbeitungsbereichs 18, der sonst nicht einsehbar wäre, und - den Live-Bildern überlagert - Arbeitsanleitungen für zukünftige Phasen des aktuellen Fertigungsschritts F1 bzw. für den nächstfolgenden Fertigungsschritt F2.

Die Fig. 3 zeigt ein durch das Anzeigemittel 19 der Bedienperson 20 dargestelltes Bild des Bearbeitungsbereichs 18 mit diesem Bild überlagerten Arbeitsanleitungen. Eine solche Arbeitsanleitung wird beispielsweise gebildet durch einen Pfeil 24, durch den die Bewegungsrichtung des Werkstücks 5 von einer aktuellen, ersten Biegestation 25 zu einer nächsten, zweiten Biegestation 26 des nächstfolgenden Fertigungsschritts angezeigt wird. Ein Balken 27 zeigt die Position der Biegewerkzeuge 6, 7 der nachfolgenden Biegestation 26 an. Durch weitere Pfeile 28, 29 werden die Verfahrwege bzw. die Positionen der Hinteranschläge 8, 9 für deren Wechsel von der ersten Biegestation 25 des ersten Fertigungsschritts F1 zu der zweiten Biegestation 26 des nächstfolgenden, zweiten Fertigungsschritts F2 angezeigt. Die Bedienperson 20 wird somit bereits während des Ablaufs des ersten Fertigungsschritts F1 darüber informiert, zu welcher nächstfolgenden Biegestation 26 das Werkstück 5 nach dessen Entnahme aus der gerade aktuellen Biegestation 25 bewegt werden soll. Durch die so erfolgende Anzeige dieser Informationen, gemeinsam mit dem Bild der Kamera 16 und eingeblendet in das Sehfeld der Bedienperson 20, braucht diese sich nicht von der momentanen Biegestation 25 abzuwenden, um Informationen über die nächstfolgenden Fertigungsschritte, beispielsweise von dem Bildschirm 12 des Bedienterminals 11, einzuholen. Dadurch kann die Bedienperson 20 ihren Blick im Wesentlichen ohne Unterbrechung auf den Bearbeitungsbereich 18 gerichtet halten und das darin sich ereignende Geschehen ununterbrochen überwachen. Die Anzeige der Verfahrwege der Anschläge 8, 9 mithilfe der Pfeile 28, 29 macht es für die Bedienperson 20 auch leichter, einen Zusammenstoß des Werkstücks 5 mit den sich bewegenden Anschlägen 8, 9 während des Wechsels zwischen den Biegestationen 25, 26 zu vermeiden. Dies ist insbesondere deswegen sehr nützlich, da die Verstellbewegungen der Anschläge 8, 9 mit teilweise sehr hoher Geschwindigkeit erfolgen.

Die Fig. 4 zeigt ein Zeitablaufschema des Fertigungsprogramms 14 zur Herstellung eines Bauteils aus dem Werkstück 5 mit der Biegepresse 1. Gemäß diesem Ausführungsbeispiel umfasst das Fertigungsprogramm 14 drei zeitlich aufeinander folgende Fertigungsschritte F1, F2 und F3. Jeder einzelne dieser Fertigungsschritte F1, F2, F3 umfasst die folgenden Phasen:
P: Positionieren der Anschläge 8, 9;
I: Einlegen des Werkstücks 5;
B: Durchführen der Biegeumformung;
O: Auseinanderbewegen der Pressbalken und
R: Entnehmen des Werkstücks 5.

Neben der schematischen Darstellung der Phasen P, I, B, O, R der aufeinanderfolgenden Fertigungsschritte F1, F2, F3, sind in dem Zeitablaufschema der Fig. 4 auch Phasen dargestellt, in denen der vor der Biegestation 25, 26 der Biegepresse 1 stehenden Bedienperson 20 in deren Sehfeld zusätzliche Arbeitsanleitungen angezeigt werden. So wird der Bedienperson 20 - beginnend zu einem Zeitpunkt noch vor Ende des ersten Fertigungsschritts F1 - in einer Phase G2 eine Überlagerung von zusätzlichen Arbeitsanleitungen mit dem von der Kamera 16 aufgenommenen Bild durch das Anzeigemittel 19 in dessen Gesichtsfeld eingeblendet dargestellt.

Der Ablauf des Fertigungsprogramms 14, das von der Bedienperson beispielsweise mit Hilfe des Bedienterminals 11 gestartet werden kann, erfolgt somit in der folgenden Weise. Am Beginn des ersten Fertigungsschritts F1 des Fertigungsprogramms 14 erfolgt zunächst die Positionierung P1 der Anschläge 8, 9 in der ersten Biegestation 25, woraufhin die Bedienperson 20 das Werkstück 5 in den Bearbeitungsbereich 18 einlegt und an den Anschlägen 8, 9 zur Anlage bringt (Phase I1). Nach Beendigung der Phase I1 des Einlegens des Werkstücks 5 kann die Bedienperson 20 die Biegeumformung B1 starten. Dies erfolgt beispielsweise mit einem durch einen Fußtaster gebildeten Schalter. Die Biegeumformung B1 wird durch Andrücken des Oberwerkzeugs 7 gegen das Werkstück 5 und das Unterwerkzeug 6 ausgeführt, indem die beiden Pressbalken 2, 3 gegeneinander bewegt werden. Die Bewegung der Pressbalken 2, 3 erfolgt dabei automatisch basierend auf Vorgaben in dem Fertigungsprogramms 14. Für die Bedienperson 20 bleibt nur, das Auseinanderbewegen der Pressbalken 2, 3 (Phase O1) abzuwarten und das Werkstück 5 aus der ersten Biegestation 25 zu entnehmen (Phase Rl).

Schon während dieser beiden letzten Phasen O1, R1 des ersten Fertigungsschritts F1 erhält die Bedienperson 20 Informationen bzw. Anweisungen über die in dem Bearbeitungsablauf nächstfolgenden Phasen bzw. Fertigungsschritte. Diese werden der Bedienperson 20 durch das Anzeigemittel 19 in dessen Sehfeld als Überlagerung mit von der Kamera 16 aufgenommenen Bildern angezeigt. Während also die Bedienperson 20 noch die gerade erfolgende Biegeumformung B1 beobachtet, werden ihr schon zusätzlich auch eine Arbeitsanleitung G2 mit Informationen über den Verlauf des nächstfolgenden Fertigungsschritts F2 angezeigt. Diese Arbeitsanleitung G2 kann dabei grafische Elemente, wie vorstehend in Zusammenhang mit der Beschreibung der Fig. 3 beschrieben, enthalten. So umfasst die Arbeitsanleitung G2 vorzugsweise den Pfeil 24, der die Richtung zu der nächstfolgenden Biegestation 26, zu der das Werkstück 5 bewegt werden muss, angibt. Ebenso können schon während der Phasen O1 und Rl durch die beiden Pfeile 28, 29 die Bewegungen der Hinteranschläge 8, 9 zu der nächstfolgenden Biegestation 26, wie sie erst in der Phase P2 des nächstfolgenden Fertigungsschritts F2 erfolgenden werden, angezeigt werden.

Die zu den Fertigungsschritten F1 und F2 zeitlich parallel erfolgende Anzeige der Arbeitsanleitung G2 erfolgt vorzugsweise solange bis sowohl das Positionieren P2 der Hinteranschläge 8, 9 und das Einlegen des Werkstücks 5 in die nächstfolgende Biegestation 26 für den zweiten Fertigungsschritt F2 abgeschlossen sind. Erst mit dem durch die Bedienperson 20 eingeleiteten Start der zweiten Biegeumformung B2 des zweiten Fertigungsschritts F2 wird die Darstellung der Arbeitsanleitungen G2 beendet. In analoger Weise, wie vorstehend für den ersten Fertigungsschritt F1 beschrieben, erfolgt auch bereits vor Abschluss des zweiten Fertigungsschritts F2 die Darstellung zusätzlicher Arbeitsanleitungen G3 für den weiteren Verlauf des nächstfolgenden, dritten Fertigungsschritts F3.

Die Arbeitsanleitung G3 kann gegebenenfalls auch nur eine Neupositionierung der Hinteranschläge 8, 9 umfassen, wenn der folgende dritte Fertigungsschritt F3 an der gleichen Biegestation 26 wie der vorherige Fertigungsschritt F2 durchgeführt werden soll. Anderseits kann die Darstellung der Arbeitsanleitung G3 auch zusätzliche Hinweise für die Bedienperson 20 enthalten, die sich auf die Art und Weise wie das verformte Werkstück 5 aus dem Bearbeitungsbereich 18 bzw. der Biegestation 25, 26 günstigerweise entnommen werden kann, beziehen. So könnte wegen der größer werdenden Komplexität der geometrischen Form des Werkstücks 5 - in Folge der zunehmenden Anzahl von an diesem Werkstück 5 vorgenommenen Biegeumformungen - dessen Entnahme aus der Biegestation 25, 26 eine besondere Art der Handhabung erforderlich machen. Der Bedienperson 20 wird dieser Umstand dadurch mitgeteilt, dass die Arbeitsanleitung G3 beispielsweise auch ein auf eine bestimmte Stelle des Werkstücks 5 weisendes Symbol enthält, das einen bevorzugten Angriffspunkt zur leichteren Entnahme des Werkstücks 5 aus der Biegestation 25, 26 anzeigt. Als ein solches Symbol wird beispielsweise das Bild einer Hand benutzt, mit dem angezeigt wird, wie das Werkstück 5 an einer bestimmten Stelle erfasst werden soll.

Gemäß einer bevorzugten Weiterbildung der Biegepresse 1 ist in dessen Bildverarbeitungsprogramm 15 vorgesehen, dass die Arbeitsanleitungen G2, G3 auch animierte Bewegungsabläufe enthalten, die das Werkstück 5 zeigen, wie es von seiner Entnahme aus der ersten Biegestation 25 des ersten Fertigungsschritts F1 zu der zweiten Biegestation 26 hin und beim Einlegen in der Phase 12 des nächstfolgenden Fertigungsschritts F2 bewegt wird. Vorzugsweise wird diese animiert dargestellte Bewegung des Werkstücks 5 der Bedienperson 20 über die Dauer der Phase der Darstellung der Arbeitsanleitung G2, G3 mehrfach hintereinander wiederholt präsentiert. Das wiederholte Vorführen dieser Bewegungsabläufe bei der Darstellung der Arbeitsanleitung G2, G3 wird erst durch Starten der Phase der jeweils nächstfolgenden Biegeumformung B2, B3 beendet.

Die Handhabung des Werkstücks 5 durch die Bedienperson 20 zur Vorbereitung des jeweils nächstfolgenden Fertigungsschritts F2, F3 kann zusätzlich dadurch erleichtert werden, dass in den Arbeitsanleitungen G2, G3 auch Hinweise zur Neuausrichtung des Werkstücks 5 enthalten sind. Solche Hinweise können beispielsweise durch die zusätzliche Darstellung von Drehachsen und entsprechenden Winkelwerten angegeben werden. Als solche Drehachsen eignen sich besonders die Koordinatenachsen des üblicherweise verwendeten kartesischen Koordinatensystems X, Y, Z (Fig. 1, 2). Die Angabe bzw. Anleitung zur Neuausrichtung des Werkstücks 5 in der Arbeitsanleitung G2, G3 kann auch durch eine Aufeinanderfolge von nacheinander durchzuführenden Drehungen um verschiedene Drehachsen angegeben werden.

Bei den vorstehend beschriebenen Ausführungsbeispielen der Fertigungseinrichtung bzw. der Biegepresse 1 wurde angenommen, dass der Start der Phasen P1, P2, P3 des Positionierens der Anschläge 8, 9 als auch der Start der Phasen B1, B2, B3 der Ausführung der Biegeumformungen von der Bedienperson 20 veranlasst wird, in dem diese einen entsprechenden Schalter (z.B. einen Fußtaster) betätigt.

Gemäß der Erfindung ist vorgesehen, dass die Steuervorrichtung 10 auch ein Bilderkennungsprogramm 30 umfasst. Mit Hilfe des Bilderkennungsprogramms 30 ist es möglich, die von der Kamera 16 aufgezeichneten Bilder des Bearbeitungsbereichs 18 auszuwerten und insbesondere die räumliche Lage und Ausrichtung des Werkstücks 5 automatisch zu bestimmen. Dadurch ist es möglich, dass von dem Bilderkennungsprogramm 30 das Einlegen des Werkstücks 5 in den Bearbeitungsbereich 18 und das Anlegen seiner Kanten an den Anschlägen 8, 9 erkannt wird und so dessen Abschluss automatisch an die Steuervorrichtung 10 mitgeteilt werden kann. Die Biegeumformungen in den Phasen B1, B2, B3 können sodann von der Steuervorrichtung 10 automatisch gestartet werden.

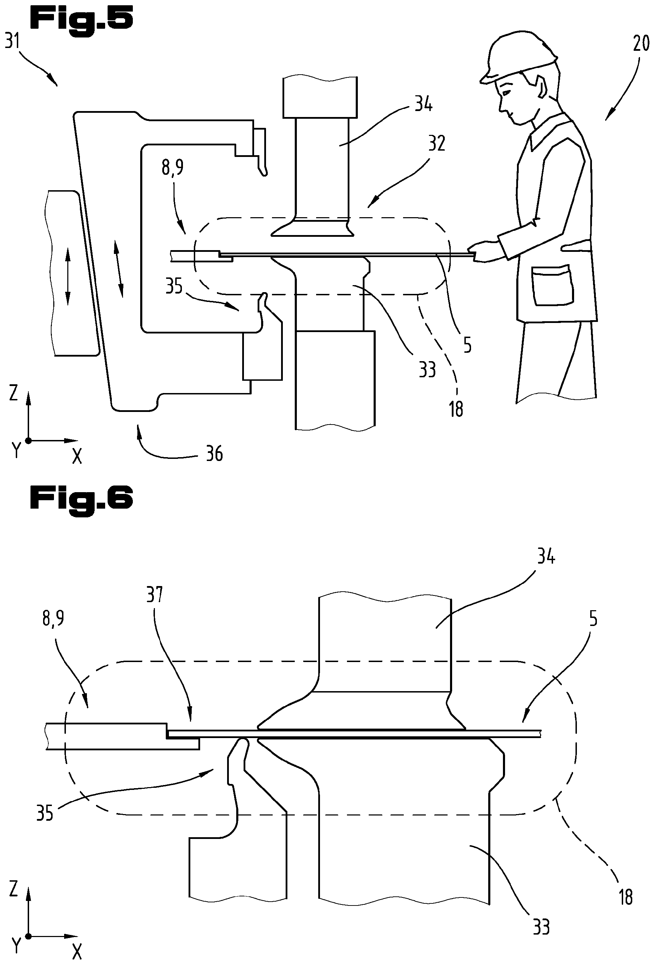

Durch die Auswertung der von der Kamera 16 aufgezeichneten Bilder mit Hilfe des Bilderkennungsprogramms 30 ist es insbesondere auch möglich, eine fehlerhafte Bedienung durch die Bedienperson 20 zu erkennen und dieser anzuzeigen. Bedienfehler, wie das Einlegen des Werkstücks 5 in der falschen Biegestation 25, 26 oder eine nicht korrekte Ausrichtung des Werkstücks 5 beim Einlegen in die Biegestation 25, 26 können so in der Form einer Warnmeldung zusätzlich in den Arbeitsanleitungen G2, G3 der Bedienperson 20 angezeigt werden. Die Fig. 5 zeigt eine Biegemaschine 31 zum Schwenkbiegen in Seitenansicht und ausschnittsweise dargestellt.

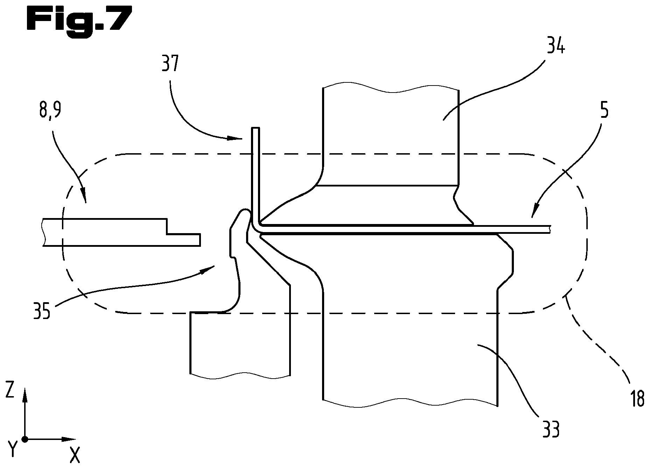

Die Biegemaschine 31 umfasst zunächst eine Haltevorrichtung 32 mit einer unteren Haltewange 33 und einer oberen Haltewange 34, zwischen denen das Werkstück 5 zur Bearbeitung festgeklemmt werden kann. Dies erfolgt üblicherweise indem die obere Haltewange 34 gegen das zwischenliegende Werkstück 5 und die untere Haltewange 33 abgesenkt und dagegen gedrückt wird. Zur Biegeumformung ist ein Biegewerkzeug 35 vorgesehen. Das Biegewerkzeug 35 ist an einem Werkzeugträger 36 befestigt und kann mit dessen Hilfe in zumindest zwei Raumrichtungen (X, Z) verstellt werden. Eine Umformung des Werkstückes 5 kann beim Schwenkbiegen dadurch erreicht werden, dass das Biegewerkzeug 35 von dem durch einen Verstellantrieb bewegten Werkzeugträger 36 gegen einen freien, aus den Haltewangen 33, 34 hervorragenden Schenkel 37 des Werkstückes 5 verfahren wird und auf diesen unter Ausführung einer geeigneten Verstellbewegung einwirkt (Fig. 6, 7). Die entsprechenden Bahnkoordinaten bzw. Bahnbewegungsdaten für die Bewegung des Werkzeugträgers 36 mit dem Verstellantrieb (nicht dargestellt) werden von der Steuervorrichtung 10 unter Vorgabe durch das Fertigungsprogramm 14 generiert. Das gegen den Schenkel 37 des Werkstückes 5 drückende Biegewerkzeug 35 bewirkt schließlich die gewünschte Biegeumformung des Werkstückes 5 (Fig. 7).

In analoger Weise wie vorstehend anhand der Figuren 1 und 2 der Biegemaschine 1 zum Freibiegen ist auch bei der Biegemaschine zum Schwenkbiegen 31 zumindest eine Kamera 16 zur Erfassung des Bearbeitungsbereichs 18 vorgesehen. Ebenso sind die Anschläge 8, 9 zum Ausrichten des Werkstückes 5 durch die Steuervorrichtung 10 auf Grundlage von entsprechenden Steuersignalen des Fertigungsprogramms 14 für die Ausführung unterschiedlicher, aufeinanderfolgender Fertigungsschritte F1, F2, F3, usw. verstellbar.

Die Fig. 6 zeigt ein Detail der Biegemaschine 31 zum Schwenkbiegen mit einem noch unbearbeiteten Werkstück 5 am Beginn der ersten Biegeumformung. Das Werkstück 5 ist mit einer seiner Kanten an den Anschlägen 8, 9 anliegend ausgerichtet und zwischen den Haltewangen 33, 34 festgeklemmt. Das Biegewerkzeug 35 befindet sich am Schenkel 37 des Werkstückes 5 anliegend, in seiner Startposition zur Ausführung der Biegeumformung.

In der Fig. 7 ist das Werkstück 5 nach Beendigung der ersten Biegeumformung gezeigt (Phase B1 des ersten Fertigungsschritts F1). Die angewinkelte Form des Schenkels 37 des Werkstücks 5 ist Resultat einer entsprechend ausgeführten Bewegungsbahn des Biegewerkzeug 35. Nach Anheben der oberen Haltewange 34 kann das Werkstück 5 von der Bedienperson 20 dann aus der Bearbeitungsstation entnommen werden.

Die Herstellung eines Bauteils durch eine Aufeinanderfolge von mehreren Biegeumformungen an dem Werkstück 5 kann von der Bedienperson 20 mit der Biegemaschine 31 zum Schwenkbiegen ebenfalls unterstützt durch die Steuervorrichtung 10 bzw. dessen Fertigungsprogramm 14 durchgeführt werden. Jeder der zeitlich aufeinander folgenden Fertigungsschritte F1, F2, F3, usw. umfasst dabei die folgenden fünf Phasen:
P: Positionieren der Anschläge 8, 9;
I: Einlegen des Werkstückes 5 und Festklemmen zwischen der unteren Haltewange 33 und der oberen Haltewange 34;
B: Durchführen der Biegeumformung;
O: Auseinanderbewegen der Haltewangen 33, 34 und
R: Entnehmen des Werkstückes 5.

Im Unterschied zum vorstehend beschriebenen Freibiegen kommt bei der Bearbeitung mit der Biegemaschine 31 zum Schwenkbiegen in der Phase I des Einlegens des Werkstückes 5 zusätzlich noch das durch die Bedienperson 20 zu startende Zusammenbewegen der Haltewangen 33 und 34 zum Festklemmen des Werkstückes 5 hinzu. Dazu ist üblicherweise ein Fußtaster als Schalter von der Bedienperson 20 zu betätigen. Die anschließende Phase B des Durchführens der Biegeumformung kann sodann automatisch im Anschluss an das Festklemmen des Werkstückes 5 ausgeführt werden. Alternativ kann aber auch vorgesehen sein, dass das Starten der Phase B des Durchführens der Biegeumformung die neuerliche Betätigung des Schalters durch die Bedienperson 20 erfordert.

Das Zeitablaufschema des Fertigungsprogramms 14 zur Herstellung eines Bauteils aus dem Werkstück 5 mit der Biegepresse 31 zum Schwenkbiegen gleicht im Sonstigen dem Ablauf wie er in Fig. 4 dargestellt ist. Dies trifft auch für die Überlagerung von Arbeitsanleitungen G1, G2, G3 für jeweils nachfolgende Phasen eines aktuellen Fertigungsschritts F1 oder eines nächstfolgenden zweiten Fertigungsschritts F2 mit den an dem Anzeigemittel 19 darzustellenden Bildern des Bearbeitungsbereichs 18 zu.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Biegemaschine | 31 | Biegemaschine |
| 2 | Pressbalken | 32 | Haltevorrichtung |
| 3 | Pressbalken | 33 | Untere Haltewange |
| 4 | Maschinengestell | 34 | Obere Haltewange |
| 5 | Werkstück | 35 | Biegewerkzeug |
| 6 | Biegewerkzeug | 36 | Werkzeugträger |
| 7 | Biegewerkzeug | 37 | Schenkel |
| 8 | Anschlag | | |
| 9 | Anschlag | | |
| 10 | Steuervorrichtung | | |
| 11 | Bedienterminal | | |
| 12 | Bildschirm | | |
| 13 | Eingabevorrichtung | | |
| 14 | Fertigungsprogramm | | |
| 15 | Bildverarbeitungsprogramm | | |
| 16 | Kamera | | |
| 17 | Kamera | | |
| 18 | Bearbeitungsbereich | | |
| 19 | Anzeigemittel | | |
| 20 | Bedienperson | | |
| 21 | Anschlagvorrichtung | | |
| 22 | Führungsbahn | | |
| 23 | Stellmotor | | |
| 24 | Pfeil | | |
| 25 | Biegestation | | |
| 26 | Biegestation | | |
| 27 | Balken | | |
| 28 | Pfeil | | |
| 29 | Pfeil | | |
| 30 | Bilderkennungsprogramm | | |

## Patentansprüche

1. Verfahren zur Herstellung eines Bauteils durch Umformung eines Werkstücks (5) aus Blech mit einer Biegemaschine (1) mit einer Steuervorrichtung (10) und einem Fertigungsprogramm (14) zum Betreiben der Biegemaschine (1), wobei in einem Bearbeitungsbereich (18) zumindest zwei Fertigungsschritte (F1, F2) mit jeweils einer Biegeumformung (B1, B2) an dem Werkstück (5) ausgeführt werden, und wobei mit einer Kamera (16, 17) der Bearbeitungsbereich (18) erfasst wird und Bilder des Bearbeitungsbereichs (18) der Bedienperson (20) durch ein Anzeigemittel (19) dargestellt werden, wobei
während der Durchführung eines ersten Fertigungsschritts (F1) von einem Bildverarbeitungsprogramm (15) den durch das Anzeigemittel (19) darzustellenden Bildern des Bearbeitungsbereichs (18) Arbeitsanleitungen (G1, G2, G3) für eine nachfolgende Phase des aktuellen, ersten Fertigungsschritts (F1) oder für einen nächstfolgenden, zweiten Fertigungsschritt (F2) überlagert und durch das Anzeigemittel (19) dargestellt werden, **dadurch gekennzeichnet,**
**dass** durch ein Bilderkennungsprogramm (30) aus den von der Kamera (16) aufgezeichneten Bildern des Bearbeitungsbereichs (18) das Anlegen von Kanten des Werkstücks (5) an zur Ausrichtung des Werkstücks (5) vorgesehenen Anschlägen (8, 9) erkannt wird und sodann von der Steuervorrichtung (10) die Biegeumformung (B1, B2) automatisch gestartet wird.

2. Verfahren nach Anspruch 1, **dadurch gekennzeichnet, dass** die Arbeitsanleitung (G1, G2, G3) Symbole aus einer Gruppe, umfassend Linien, Pfeile und Balken, enthält.

3. Verfahren nach Anspruch 1 oder 2, **dadurch gekennzeichnet, dass** die Arbeitsanleitung (G1, G2, G3) Symbole aus einer Gruppe, umfassend Drehachsen und Werteangaben von Drehwinkeln, enthält.

4. Verfahren nach einem der vorhergehenden Ansprüche, **dadurch gekennzeichnet, dass** die Arbeitsanleitung (G1, G2, G3) eine graphische Darstellung des Werkstücks (5) enthält.

5. Verfahren nach einem der vorhergehenden Ansprüche, **dadurch gekennzeichnet, dass** die Arbeitsanleitung (G1, G2, G3) ein zu einer bestimmten Stelle des Werkstücks (5) weisendes Symbol zur Angabe eines bevorzugten Angriffspunkts zum Entnehmen des Werkstücks (5) enthält.

6. Verfahren nach einem der vorhergehenden Ansprüche, **dadurch gekennzeichnet, dass** die Arbeitsanleitung (G1, G2, G3) ein Symbol zur Mitteilung einer Warnung wegen eines Bedienfehlers enthält.

7. Verfahren nach einem der vorhergehenden Ansprüche, **dadurch gekennzeichnet, dass** die Arbeitsanleitung (G1, G2, G3) eine in Bewegung befindliche graphische Darstellung des Werkstücks (5) enthält.

8. Verfahren nach einem der vorhergehenden Ansprüche, **dadurch gekennzeichnet, dass** die Arbeitsanleitung (G1, G2, G3) in Bewegung befindliche graphische Darstellungen von Anschlägen (8, 9) zur Ausrichtung des Werkstücks (5) enthält.

9. Verfahren nach einem der vorhergehenden Ansprüche, **dadurch gekennzeichnet, dass** die während einer zeitlichen Dauer der Darstellung der Arbeitsanleitung (G1, G2, G3) bewegt erfolgende graphische Darstellung des Werkstücks (5) mehrfach hintereinander wiederholt angezeigt wird.

10. Verfahren nach einem der vorhergehenden Ansprüche, **dadurch gekennzeichnet, dass** die zeitliche Dauer der Darstellung der Arbeitsanleitung (G1, G2, G3) noch vor Beendigung der Phase (O1) des Auseinanderbewegens der Pressbalken (2, 3) begonnen wird.

11. Verfahren nach einem der vorhergehenden Ansprüche, **dadurch gekennzeichnet, dass** die zeitliche Dauer der Darstellung der Arbeitsanleitung (G1, G2, G3) gemeinsam mit dem Ende der ersten Biegeumformung (B1) begonnen wird.

12. Verfahren nach einem der vorhergehenden Ansprüche, **dadurch gekennzeichnet, dass** die zeitliche Dauer der Darstellung der Arbeitsanleitung (G1, G2, G3) gemeinsam mit dem Start der zweiten Biegeumformung (B2) des nächstfolgenden Fertigungsschritts (F2) beendet wird.

13. Verfahren nach einem der vorhergehenden Ansprüche, **dadurch gekennzeichnet, dass** zur Bestimmung der räumlichen Koordinaten der Bedienperson (20) von einem Positionsermittlungssystem Bilder einer an einer Vorderseite des oberen Pressbalkens (3) angeordneten Kamera (17) ausgewertet werden.

14. Verfahren nach einem der vorhergehenden Ansprüche, **dadurch gekennzeichnet, dass** mit dem Positionsermittlungssystem die Position der Bedienperson (20) ermittelt wird und durch das Bildverarbeitungsprogramm (15) unter Berücksichtigung von Koordinaten der Kamera (16, 17), von Koordinaten des Bearbeitungsbereichs (18) und von Koordinaten der Position der Bedienperson (20) aus den von der Kamera (16, 17) aufgezeichneten Bildern jeweils ein perspektivisch transformiertes Bild erzeugt wird.

## Claims

1. A method for producing a component by forming a workpiece (5) from sheet metal with a bending machine (1) having a control device (10) and a manufacturing program (14) for operating the bending machine (1), wherein in a processing area (18) at least two manufacturing steps (F1, F2) each with a bending formation (B 1, B2) are carried out on the workpiece (5), and wherein the processing area (18) is recorded by a camera (16, 17) and images of the processing area (18) are displayed to the operator (20) by a display means (19), wherein during the performance of a first manufacturing step (F1), working instructions (G1, G2, G3) for a subsequent phase of the current, first manufacturing step (F1) or for a subsequent, second manufacturing step (F2) are superimposed by an image processing program (15) on the images of the processing area (18) to be displayed by the display means (19) and are displayed by the display means (19), **characterized in that** the application of edges of the workpiece (5) to abutments (8, 9) provided for the alignment of the workpiece (5) is recognized by an image recognition program (30) from the images of the processing area (18) recorded by the camera (16) and then the bending forming (B1, B2) is automatically started by the control device (10).

2. The method according to claim 1, **characterized in that** the working instruction (G1, G2, G3) includes symbols from a group comprising lines, arrows and bars.

3. The method according to claim 1 or 2, **characterized in that** the working instruction (G1, G2, G3) includes symbols from a group comprising rotation axes and value indications of rotation angles.

4. The method according to one of the preceding claims, **characterized in that** the working instruction (G1, G2, G3) includes a graphical representation of the workpiece (5).

5. The method according to one of the preceding claims, **characterized in that** the working instruction (G1, G2, G3) includes a symbol pointing to a specific location on the workpiece (5) to indicate a preferred point of engagement for removing the workpiece (5).

6. The method according to one of the preceding claims, **characterized in that** the working instruction (G1, G2, G3) includes a symbol for communicating a warning due to an operating error.

7. The method according to one of the preceding claims, **characterized in that** the working instruction (G1, G2, G3) includes a graphic representation of the workpiece (5) in motion.

8. The method according to one of the preceding claims, **characterized in that** the working instruction (G1, G2, G3) includes graphic representations, in motion, of abutments (8, 9) for aligning the workpiece (5).

9. The method according to one of the preceding claims, **characterized in that** the graphical representation of the workpiece (5) which takes place in a moving manner during a temporal duration of the presentation of the work instruction (G1, G2, G3) is repeatedly displayed one after the other.

10. The method according to one of the preceding claims, **characterized in that** the temporal duration of the presentation of the working instruction (G1, G2, G3) is started before the phase (O1) of moving apart the press beams (2, 3) is finished.

11. The method according to one of the preceding claims, **characterized in that** the temporal duration of the presentation of the working instruction (G1, G2, G3) is started together with the end of the first bending formation (B1).

12. The method according to one of the preceding claims, **characterized in that** the temporal duration of the presentation of the working instruction (G1, G2, G3) is terminated together with the start of the second bending formation (B2) of the subsequent manufacturing step (F2).

13. The method according to one of the preceding claims, **characterized in that** for determining the spatial coordinates of the operator (20), images of a camera (17) arranged at a front side of the upper press beam (3) are evaluated by a position determination system.

14. The method according to one of the preceding claims, **characterized in that** the position of the operator (20) is determined by means of the position determination system, and a respective image with transformed perspective is generated from the images recorded by the camera (16, 17) by the image processing program (15), taking into account coordinates of the camera (16, 17), coordinates of the processing area (18) and coordinates of the position of the operator (20).

## Revendications

1. Procédé de fabrication d'un composant par formage d'une pièce (5) en tôle avec une cintreuse (1) dotée d'un dispositif de commande (10) et d'un programme de production (14) pour faire fonctionner la cintreuse (1), au moins deux étapes de production (F1, F2) avec respectivement un formage par cintrage (B1, B2) étant effectuées sur la pièce (5) dans une zone d'usinage (18), et la zone d'usinage (18) étant captée par une caméra (16, 17), et des images de la zone d'usinage (18) étant représentées à l'intention de l'opérateur (20) par un moyen d'affichage (19),
dans lequel,
pendant la réalisation d'une première étape de production (Fl), des instructions de travail (G1, G2, G3) pour une phase suivante de l'actuelle première étape de production (F1) ou pour une deuxième étape de production (F2) qui suit immédiatement sont, par un programme de traitement d'images (15), superposées aux images de la zone d'usinage (18) devant être représentées par le moyen d'affichage (19) et sont représentées par le moyen d'affichage (19), **caractérisé en ce que**, par un programme de reconnaissance d'images (30), à partir des images de la zone d'usinage (18) enregistrées par la caméra (16), le placement d'arêtes de la pièce (5) contre des butées (8, 9) prévues pour l'orientation de la pièce (5) est détecté et puis le formage par cintrage (B1, B2) est lancé automatiquement par le dispositif de commande (10).

2. Procédé selon la revendication 1, **caractérisé en ce que** l'instruction de travail (G1, G2, G3) contient des symboles issus d'un groupe, comprenant des lignes, des flèches et des barres.

3. Procédé selon la revendication 1 ou 2, **caractérisé en ce que** l'instruction de travail (G1, G2, G3) contient des symboles issus d'un groupe, comprenant des axes de rotation et des indications de valeurs d'angles de rotation.

4. Procédé selon l'une des revendications précédentes, **caractérisé en ce que** l'instruction de travail (G1, G2, G3) contient une représentation graphique de la pièce (5).

5. Procédé selon l'une des revendications précédentes, **caractérisé en ce que** l'instruction de travail (G1, G2, G3) contient un symbole dirigé vers un endroit défini de la pièce (5) pour indiquer un point d'attaque préféré pour l'enlèvement de la pièce (5).

6. Procédé selon l'une des revendications précédentes, **caractérisé en ce que** l'instruction de travail (G1, G2, G3) contient un symbole destiné à la communication d'un avertissement dû à une erreur de manipulation.

7. Procédé selon l'une des revendications précédentes, **caractérisé en ce que** l'instruction de travail (G1, G2, G3) contient une représentation graphique animée de la pièce (5).

8. Procédé selon l'une des revendications précédentes, **caractérisé en ce que** l'instruction de travail (G1, G2, G3) contient des représentations graphiques animées de butées (8, 9) destinées à l'orientation de la pièce (5).

9. Procédé selon l'une des revendications précédentes, **caractérisé en ce que** la représentation graphique de la pièce (5) qui s'effectue de façon animée pendant une durée de la représentation de l'instruction de travail (G1, G2, G3) est affichée de façon répétée successivement plusieurs fois.

10. Procédé selon l'une des revendications précédentes, **caractérisé en ce que** la durée de la représentation de l'instruction de travail (G1, G2, G3) peut commencer dès avant la fin de la phase (O1) du mouvement d'écartement des barres de pression (2, 3).

11. Procédé selon l'une des revendications précédentes, **caractérisé en ce que** la durée de la représentation de l'instruction de travail (G1, G2, G3) commence conjointement avec la fin du premier formage par cintrage (B1).

12. Procédé selon l'une des revendications précédentes, **caractérisé en ce que** la durée de la représentation de l'instruction de travail (G1, G2, G3) s'achève conjointement avec le début du deuxième formage par cintrage (B2) de l'étape de production (F2) qui suit immédiatement.

13. Procédé selon l'une des revendications précédentes, **caractérisé en ce que**, pour la détermination des coordonnées spatiales de l'opérateur (20), des images d'une caméra (17) disposée sur une face avant de la barre de pression (3) supérieure sont analysées par un système de détermination de position.

14. Procédé selon l'une des revendications précédentes, **caractérisé en ce que**, avec le système de détermination de position, la position de l'opérateur (20) est déterminée, et respectivement une image transformée en perspective est produite par le programme de traitement d'image (15) avec prise en compte de coordonnées de la caméra (16, 17), de coordonnées de la zone d'usinage (18) et de coordonnées de la position de l'opérateur (20) à partir des images enregistrées par la caméra (16, 17).
